Europäisches Patentamt

European Patent Office

Office européen des brevets

(11) Veröffentlichungsnummer: **0 143 421**
A2

(12) **EUROPÄISCHE PATENTANMELDUNG**

(21) Anmeldenummer: 84114006.4

(22) Anmeldetag: 20.11.84

(51) Int. Cl.⁴: **B 60 R 13/06**, B 60 J 1/17

(30) Priorität: 23.11.83 DE 3342362

(43) Veröffentlichungstag der Anmeldung: 05.06.85
Patentblatt 85/23

(84) Benannte Vertragsstaaten: **DE FR GB IT SE**

(71) Anmelder: **METZELER KAUTSCHUK GMBH,**
**Gneisenaustrasse 15, D-8000 München 50 (DE)**

(72) Erfinder: **Brocke, Rolf, Engetsweller-Strasse 37,**
**D-7988 Wangen 4 (DE)**

(74) Vertreter: **Michelis, Theodor, Dipl.-Ing.,**
**Gneisenaustrasse 15, D-8000 München 50 (DE)**

(54) **Vorrichtung zur Führung und Halterung einer Fensterscheibe in einem Kraftfahrzeug.**

(57) Eine Vorrichtung zur Führung und Halterung einer Fensterscheibe in einem Kraftfahrzeug weist ein einstückiges Metallprofil, beispielsweise ein stranggegossenes Aluminiumprofil, mit einem U-förmigen Klemmbereich, der unter Zwischenschaltung eines ersten Gummiprofils den entsprechenden Karosserieteil des Kraftfahrzeugs umgibt, und mit einem Scheibenführungsbereich auf, in dem mindestens ein zweites Gummiprofil für die Scheibenführung angebracht ist. Die Gummiprofile werden formschlüssig in entsprechenden Aussparungen des Metallprofils aufgenommen.

0143421

METZELER KAUTSCHUK GmbH

MK 330 P 83 EP
München, den 22.11.1984

Vorrichtung zur Führung und Halterung einer Fensterscheibe in einem Kraftfahrzeug

Die Erfindung betrifft eine Vorrichtung zur Führung und
Halterung einer Fensterscheibe in einem Kraftfahrzeug der
im Oberbegriff des Anspruchs 1 angegebenen Gattung.

Solche Vorrichtungen werden insbesondere für die Führung
und Halterung der Scheiben der Seitenfenster von Kraftfahrzeugen eingesetzt, wobei die eigentliche Führung und
Halterung durch den direkten Kontakt zwischen den Profilen
aus elastomerem Material, insbesondere Gummiprofilen, einerseits und dem Randbereich der Fensterscheibe andererseits erfolgt, wodurch die einwandfreie Führung der Fensterscheibe ohne jede Gefahr einer Beschädigung ihrer
empfindlichen Oberfläche gewährleistet ist. Trotz vieler
Entwicklungen auf diesem Gebiet bereitet jedoch nach wie
vor die Verbindung einer solchen Vorrichtung mit dem entsprechenden Karosserieteil des Fahrzeugs Probleme; diese
Verbindung kann beispielsweise durch Aufkleben des entsprechenden Gummiprofils auf das zugehörige Karosserieteil
erfolgen; die entsprechende Montage ist jedoch mühsam und
aufwendig.

Weiterhin ist es bekannt, sogenannte "Verbund-Profile"
zu verwenden, also Profile mit einem weichen Dichtungsteil
und mit einem Klemmteil aus lederhartem Gummi; diese Verbundprofile sind jedoch in der Herstellung sehr aufwendig
und kompliziert und dementsprechend kostspielig. Dabei
spielt auch eine Rolle, daß sie mit engen Toleranzen gefertigt werden müssen, da sie im exakten Formschluß auf die entsprechenden Karosserieteile aufgebracht werden.

Und schließlich können übliche Gummiprofile mit Stahleinlagen versehen werden, die die erforderlichen Klemmkräfte erzeugen. Hierbei besteht jedoch die Gefahr, daß aufgrund der Reibung zwischen dem Gummi und dem Karosserieteil die Gummischicht abgetragen wird und es zu einem direkten Kontakt Karosserieteil/Stahleinlage kommt. Diese Berührungsstelle ist naturgemäß besonders empfindlich gegen Rostanfall.

Ein weiteres Problem bei solchen Vorrichtungen liegt darin, daß im Zuge der Entwicklung von strömungsgünstigen Karosserien versucht wird, die Außenfläche der Fensterscheibe - soweit möglich - mit der Außenfläche der Karosserie fluchten zu lassen; dies bedingt jedoch wiederum, daß die für die Führung und Halterung der Fensterscheibe erforderlichen Gummiprofile an ihrer Außenseite möglichst wenig vorstehen, was mit den herkömmlichen Konstruktionen kaum erreicht werden kann.

Und schließlich werden im allgemeinen die Gummiprofile noch durch eine zusätzliche Metallschicht abgedeckt, die einerseits als Zierleiste und zum anderen als Schutz gegen äußere Einwirkungen dient. Hierzu ist ein weiterer, zusätzlicher Arbeitsgang erforderlich, der insgesamt die Herstellung und die Montage der bisher üblichen Gummiprofile sehr kompliziert macht.

Der Erfindung liegt deshalb die Aufgabe zugrunde, eine Vorrichtung zur Führung und Halterung einer Fensterscheibe in einem Kraftfahrzeug der angegebenen Gattung zu schaffen, bei der die oben erwähnten Nachteile nicht auftreten.

Insbesondere soll eine Vorrichtung vorgeschlagen werden, die einfach hergestellt und montiert werden kann, bei Bedarf, beispielsweise bei Reparaturarbeiten, die problemlose Demontage ermöglicht, den zusätzlichen Einbau einer Zierleiste aus Metall überflüssig macht und schließlich ermöglicht, daß die Außenfläche der Fensterscheibe nahezu bündig zur Außenfläche der Karosserie verläuft.

Dies wird erfindungsgemäß durch die im kennzeichnenden Teil des Anspruchs 1 angegebenen Merkmale erreicht.

Zweckmäßige Ausführungsformen sind in den Unteransprüchen zusammengestellt.

Die mit der Erfindung erzielten Vorteile beruhen zunächst auf der Verwendung eines Metallprofils, das zweckmäßigerweise aus Aluminium durch Stranggießen oder in Pulvermetallurgieverfahren hergestellt wird. Dieses Metallprofil liefert einerseits die erforderliche mechanische Festigkeit, insbesondere für den eigentlichen Klemmbereich, und dient zum anderen gleichzeitig als nach außen sichtbarer Schutz und Zierleiste, so daß keine weiteren Montagearbeiten für die Anbringung einer zusätzlichen Zierleiste erforderlich sind.

Dieses Metallprofil weist Aussparungen auf, in denen formschlüssig Gummiprofile fixiert sind. Diese Gummiprofile umgreifen einerseits den zugehörigen Karosserieteil des Fahrzeugs und führen und haltern andererseits den Randbereich der Fensterscheibe, so daß es nicht zu einem direkten Kontakt Metall/Metall kommen kann. Aufgrund des hohen Verformungswiderstandes eines solchen Metallprofils werden auch ausreichend hohe Klemm- und Führungskräfte erzeugt, so daß die exakte Halterung und Führung der Fensterscheibe gewährleistet wird. Gleichzeitig dient der nach außen sichtbare Teil des Metallprofils als Zierleiste, die widerstandsfähiger als die oft verwendeten Kunststoff-Schichten ist.

0143421

Und schließlich kann die Außenfläche der Fensterscheibe nahezu bündig mit der Außenfläche der Karosserie angeordnet werden, da bereits relativ dünne Metallprofile ausreichend hohe Führungskräfte erzeugen.

Die Gummiprofile können in die entsprechenden Aussparungen des Metallprofils eingeschoben bzw. eingeknöpft werden, so daß sich eine einfache Montage und anschließend auch die einfache Befestigung am Kraftfahrzeug ergeben. Das Metallprofil mit den eingesetzten Gummiprofilen kann dann direkt am Band am zugehörigen Kraftfahrzeug montiert werden, wobei sich aufgrund der mechanischen Festigkeit des Metallprofils immer ein gleichmäßiger Sitz in der zugehörigen Fahrzeugtür ergibt.

Die Erfindung wird im folgenden anhand von Ausführungsbeispielen unter Bezugnahme auf die beiliegenden, schematischen Zeichnungen näher erläutert. Es zeigen

Fig. 1 einen horizontalen Schnitt durch eine erfindungsgemäße Vorrichtung zur Führung und Halterung einer Fensterscheibe in einem Kraftfahrzeug, wobei diese Ausführungsform drei Gummiprofile verwendet, und

Fig. 2 eine Detailansicht einer modifizierten Ausführungsform mit zwei Gummiprofilen.

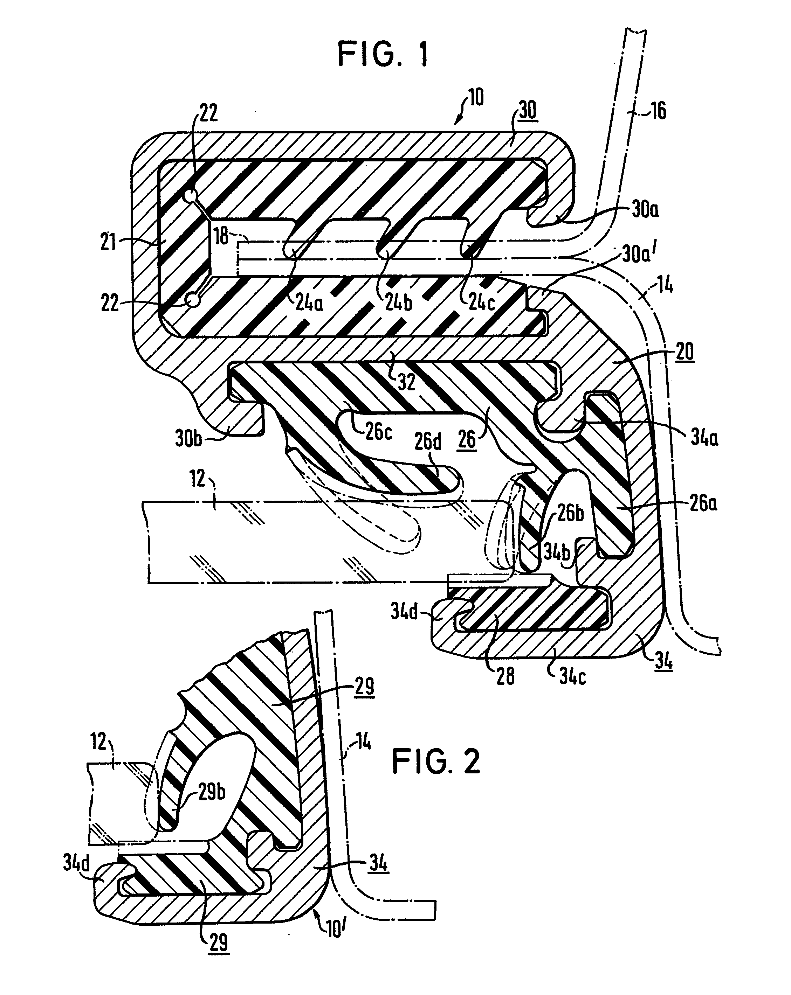

Die aus den Figuren 1 und 2 ersichtliche, allgemein durch das Bezugszeichen 10 bzw. 10' angedeutete Vorrichtung zur Führung und Halterung einer Fensterscheibe 12 in einem Kraftfahrzeug wird auf noch zu erläuternde Weise an zwei Karosserieblechen 14 und 16 einer Fahrzeugtür befestigt, die zu einer Doppellage 18 zusammengeführt sind. Der wesentliche Teil dieser Vorrichtung 10 wird durch ein einstückiges Metallprofil 20 gebildet, das aus stranggegosse-

0143421

nen Aluminiumprofilen oder in einem Pulvermetallurgieverfahren, ebenfalls aus Aluminium, hergestellt werden kann. Dieses Metallprofil 20 kommt in vorgebogenem Zustand zum Einsatz.

Der Grundgedanke liegt darin, in dem Metallprofil 20 einfache Gummiprofile zu montieren, die wiederum in direkte Berührung mit der Blech-Doppellage 18 bzw. der Fensterscheibe 12 kommen und dadurch einerseits für die sichere Befestigung am Kraftfahrzeug und andererseits für die exakte, zuverlässige Führung der Fensterscheibe 12 sorgen.

Zu diesem Zweck weist das einstückige Metallprofil 20 zwei Bereiche mit unterschiedlichen Funktionen auf, nämlich einen Klemmbereich 30 und einen Scheibenführungsbereich 34. Der Klemmbereich 30 hat im Querschnitt etwa U-Form und weist eine relativ schmale Öffnung für die Einführung der Blech-Doppellage 18 auf. Außerdem ist der Klemmbereich 30 des Metallprofils 20 im Bereich der Einführöffnung mit nach innen vorstehenden Stegen 30a, 30a' mit Schultern versehen, die zum Boden des U-Profils hingewandt sind.

In diesen Klemmbereich 30 des Metallprofils 20 wird ein ebenfalls U-förmiges Gummiprofil 21 eingeschoben, das an zumindest einer Innenfläche mit Befestigungslippen 24a, 24b und 24c versehen sind. Die Abmessungen des Gummiprofils 21 sind so auf die Abmessungen des U-förmigen Klemmbereiches 30 abgestimmt, daß die beiden Schenkel des U-förmigen Gummiprofils 21 durch die Stege 30a, 30a' mit den Schultern in dem Klemmbereich 30 fixiert werden. Der Boden des U-förmigen Gummiprofils 21 ist schräg nach außen eingeschlitzt, wie in Fig. 1 bei 22 angedeutet ist, so daß dieses Gummiprofil 21 zusammengedrückt und über die schmale Einführöffnung des Klemmbereiches 30 in das Metallprofil 20 "eingeknöpft" werden kann. Wenn der Boden des U-förmigen Gummiprofils 21 den Boden des U-förmigen Klemmbereiches 30 berührt, werden die oberen Enden des U-förmigen Gummiprofils 21 durch die Stege 30a, 30a' gehalten und fixiert. In diesem Zustand, also vor der Montage auf die Blech-Doppellage 18, haben die Befestigungslippen 24a, 24b und 24c des Gummiprofils 21 die aus Fig. 1 ersichtliche Form.

Der gemäß der Darstellung in Fig. 1 untere Schenkel 32 des U-förmigen Klemmbereiches 30 dient auch als Übergang zu dem Scheibenführungsbereich 34, der bei der Ausführungsform nach Fig. 1 insgesamt drei Aussparungen für die formschlüssige Aufnahme der Befestigungteile von zwei Gummiprofilen aufweist, nämlich einen teilweise durch den Schenkel 32 gebildeten Befestigungsbereich mit den Schultern 30b und 34a für den ersten Fuß 26c eines zweiten Gummiprofils 26, eine weitere, durch die Schultern 34a, 34b und eine gemäß der Darstellung in Fig. 1 senkrechte Fläche des Scheibenführungsbereiches 34 gebildete Aussparung für den zweiten Fuß 26a des zweiten Gummiprofils 26 sowie eine dritte, durch eine Schulter 34d, eine Grundfläche 34c und die Schulter 34b gebildete Aussparung für eine Gummiplatte 28.

Die jeweiligen Füße 26a, 26c bzw. die Gummiplatte 28 sind so auf die entsprechenden Abmessungen der Aussparungen abgestimmt, daß sie durch Zusammendrücken in diesen Aussparungen aufgenommen und anschließend formschlüssig in diesen Aussparungen gehalten werden.

Bei der Ausführungsform nach Fig. 1 weist das zweite Gummiprofil 26 eine erste, von dem Fuß 26c ausgehende Dichtlippe 26d und eine zweite, von dem Fuß 26a ausgehende Dichtlippe 26b auf, die vor der Montage an dem Kraftfahrzeug die Lagen haben, die in Fig. 1 gestrichelt angedeutet sind.

Auch die beiden Gummiprofile 26 und 28 werden, ähnlich wie das erste Gummiprofil 21, vor der eigentlichen Montage am Kraftfahrzeug in dem Metallprofil 20 befestigt.

Anschließend wird dieses Metallprofil 20 mit den eingesetzten Gummiprofilen 21, 26 und 28 bei der Endmontage des Kraftfahrzeugs am Band montiert, indem die Blech-Doppellage 18 in das U-förmige Gummiprofil 21 eingeschoben wird. Aufgrund der dabei auftretenden Verformung der Befestigungslippen 24a, 24b und 24c in Verbindung mit der Elastizität des Gummiprofils 21 wird dieses Gummiprofil 21 und damit das Metallprofil 20 fest auf der Blech-Doppellage 18 und damit an der Karosserie des Fahrzeugs gehalten.

Die eingesetzte Fensterscheibe 12 verformt nun die Dichtungslippen 26d, 26b auf die aus Fig. 1 ersichtliche Weise in die Lagen, die in Fig. 1 mit durchgezogenen Linien angedeutet sind, so daß sich eine exakte Führung und Halterung der Fensterscheibe 12 ohne direkte Berührung Metall/ Metall ergibt.

Fig. 2 zeigt eine modifizierte Ausführungsform einer Vorrichtung 10' zur Führung und Halterung einer Fensterscheibe 12 in einem Kraftfahrzeug, die sich von der Ausführungsform nach Fig. 1 nur dadurch unterscheidet, daß die beiden Gummiprofile 26 und 28 einstückig ausgebildet sind, d. h., durch ein einziges Gummiprofil 29 mit den entsprechenden Füßen und Dichtlippen gebildet werden. Auch ein solches, einstückiges Gummiprofil 29 kann ohne Probleme durch Einknöpfen in den entsprechenden Aussparungen des Scheibenführungsbereiches 34 des Metallprofils 20 befestigt werden.

0143421

METZELER KAUTSCHUK GMBH

München

MK 330 P 83 EP

Patentansprüche

1. Vorrichtung zur Führung und Halterung einer Fensterscheibe in einem Kraftfahrzeug

a) mit auf die entsprechenden Karosserieteile des Kraftfahrzeugs aufgeklemmten Profilen aus elastomerem Material,

b) die Aussparungen für die Aufnahme eines Randbereiches der Fensterscheibe aufweisen,

g e k e n n z e i c h n e t   d u r c h ,

c) ein einstückiges Metallprofil (20)

c1) mit einem U-förmigen Klemmbereich (30), der unter Zwischenschaltung eines ersten Gummiprofils (21) den Karosserieteil (18) umgibt, und

c2) mit einem Scheibenführungsbereich (34), in dem mindestens ein zweites Gummiprofil (26, 28; 29) für die Scheibenführung angebracht ist.

2. Vorrichtung nach Anspruch 1, dadurch gekennzeichnet, daß das Metallprofil (20) aus einem stranggegossenen Aluminium-Profil besteht.

3. Vorrichtung nach Anspruch 1, dadurch gekennzeichnet, daß das Metallprofil (20) aus einem durch ein Pulvermetallurgieverfahren hergestellten Aluminiumprofil besteht.

4. Vorrichtung nach einem der Ansprüche 1 bis 3, dadurch gekennzeichnet, daß der U-förmige Klemmbereich (30) des Metallprofils (20) formschlüssig ein U-förmiges Gummiprofil (21) mit verformbaren Befestigungslippen (24a, 24b, 24c) aufnimmt.

5. Vorrichtung nach Anspruch 4, dadurch gekennzeichnet, daß das U-förmige Gummiprofil (21) mit Einschnitten (22, 22) für die Erleichterung der Einführung versehen ist.

6. Vorrichtung nach einem der Ansprüche 1 bis 5, dadurch gekennzeichnet, daß das zweite Gummiprofil (26) formschlüssig in zwei Aussparungen des Scheibenführungsbereiches (34) des Metallprofils (20) aufgenommen ist und zwei Dichtlippen (26b, 26d) aufweist, die an der Innenfläche bzw. der Seitenkante der Fensterscheibe (12) anliegen.

7. Vorrichtung nach Anspruch 6, dadurch gekennzeichnet, daß das zweite Gummiprofil (29) einstückig mit einer Gummiplatte (28) ausgebildet ist, die einerseits in einer Aussparung des Scheibenführungsbereiches (34) formschlüssig aufgenommen ist und andererseits an der Außenfläche der Fensterscheibe (12) anliegt.

8. Vorrichtung nach Anspruch 6, gekennzeichnet durch ein drittes, plattenförmiges Gummiprofil (28), das einerseits formschlüssig in einer Aussparung des Scheibenführungsbereiches (34) aufgenommen ist und andererseits an der Außenfläche der Fensterscheibe (12) anliegt.

0143421

# FIG. 1

# FIG. 2